# EUROPÄISCHE PATENTSCHRIFT

(11) **EP 2 921 435 B1**
(45) Veröffentlichungstag und Bekanntmachung des Hinweises auf die Patenterteilung: **25.10.2017**
(21) Anmeldenummer: 15151482.5
(22) Anmeldetag: 16.01.2015
(51) Int. Cl.: B65G 21/20, B65G 47/53, B65G 47/66

(54) **Umlenkvorrichtung für Gegenstände und Verfahren zum Umlenken von Gegenständen**
Deflection device for objects and method for diverting objects
Dispositif de déviation pour objets et procédé de déviation d'objets

(30) Priorität: 19.03.2014 DE 102014103711
(43) Veröffentlichungstag der Anmeldung: 23.09.2015
(73) Patentinhaber: Krones AG, 93073 Neutraubling (DE)
(72) Erfinder: Seger, Martin, 93073 Neutraubling (DE)
(74) Vertreter: Grünecker Patent- und Rechtsanwälte PartG mbB

(56) Entgegenhaltungen:
- DE-C1- 4 235 369
- US-A- 5 167 319
- US-A- 5 277 296
- US-A- 5 850 902

## Beschreibung

Die Erfindung betrifft eine Umlenkvorrichtung für Gegenstände gemäß dem Oberbegriff des Patentanspruchs 1 sowie ein Verfahren zum Umlenken von Gegenständen.

### Stand der Technik

US 5.167,319 offenbart einen richtungsändernden Förderer mit einer oder zwei Zuführketten und einer oder zwei dazu senkrecht angeordneten Abführketten, wobei parallel zu den ein oder zwei Abführketten an einer Innenseite ein oder zwei zusätzliche Abführketten angeordnet sind. In einem Übergangsbereich von der einen oder den zwei Zuführketten zu der einen oder den zwei Abführketten ist eine Abstellplatte angeordnet. Besonders offenbart US 5.167,369 eine Umlenkvorrichtung gemäß dem Oberbegriff des Anspruchs 1. DE 196 32 376 A1 offenbart eine Eckstation für zwei getrennt voneinander angetriebene Transporteinrichtungen, die in einem Winkel von etwa 15° bis 175° aufeinander treffen, wobei im Überschubbereich das eine Transportband mit seiner Umlenkrolle an das andere vorbeigeführte Transportband anschließt. Im Überschubbereich ragt die Umlenkeinrichtung des ersten Transportbands in das zweite Transportband hinein oder ist integriert, wobei die Umlenkeinrichtung beispielsweise als Umlenkrolle, Rad oder Kufe vorgesehen ist. An der zweiten Transporteinrichtung ist im Überschubbereich ein Gleitstück befestigt, das an seiner Unterseite zur ersten Transporteinrichtung hin dem Bandlauf angepasst ist. Das Gleitstück weist zur ersten Transporteinrichtung eine schmale oder keine Überschubleiste auf. Werden Flaschen von dem zweiten Transportband an das erste Transportband übergeben, so ist ein Führungsgeländer vorgesehen, das Flaschen auf das erste Transportband überführt. Werden hingegen Flaschen von dem ersten Transportband an das zweite Transportband übergeben, so ist kein Führungsgeländer erforderlich.

DT 25 08 275 A1 offenbart eine rechtwinklige und niveaugleiche Anordnung von ein- oder mehrbahnigen Plattenbandförderern, wobei am Stoß der beiden Förderer die Plattenbänder des Abförderers auf ihren Umlenkrädern bis unter den Obergurt des äußeren Anförderplattenbandes und in eine seitliche Aussparung des Anförderers hineinerstreckt sind und der Zwischenraum am Stoß der beiden Förderer durch eine im Verhältnis zu den Flaschendurchmessern schmale Gleitzunge überbrückt ist. Ein Geländer leitet die auf dem Anförderband ankommenden Flaschen gegen den mit der Gleitzunge überbrückten Zwischenspalt der beiden Förderer.

EP 0 722 896 B1 offenbart eine Umlenkeinrichtung zum Überführen von Gegenständen zwischen quer ausgerichteten Förderern. Ein Transfermechanismus ist zwischen dem vorgeschalteten und dem nachgeschalteten Förderer positioniert, wobei dieser Mechanismus zwei Führungsleisten, die sich über die artikeltragenden Oberflächen des vorgeschalteten und des nachgeschalteten Förderers erstrecken, und einen Transferhilfsförderer zum Überführen beförderter Artikel über den Spalt zwischen vorgeschaltetem und nachgeschaltetem Förderer umfasst. Der Transferhilfsförderer ist Seite-an-Seite und parallel zum vorgeschalteten Förderer angeordnet und bewegt sich in die gleiche Richtung wie dieser. Die artikeltragende Oberfläche des Transferhilfsförderers ist koplanar mit den artikeltragenden Oberflächen des vorgeschalteten und des nachgeschalteten Förderers. Auf der Seite des Transferhilfsförderers, die zu dem nachgeschaltetem Förderer weist, können sogenannte Ansätze angebracht werden, die eine Seitenplatte und ein obere Platte mit einer ebenen oberen Oberfläche umfassen. Die Unterseite eines Ansatzes verläuft bogenförmig, so dass der zu überwindende Raum zwischen vorgeschaltetem und nachgeschaltetem Förderer minimiert werden kann. Da der Transferhilfsförderer mit dem vorgeschalteten Förderer läuft, räumt sich der Transferhilfsförderer automatisch am Ende eines Fördergangs frei.

Diese Vorrichtungen können einen guten Übergang von Gegenständen von einem ersten zu einem zweiten quer verlaufenden Förderband ermöglichen und ein Stehendbleiben während eines Übergangs von dem ersten zu dem zweiten Förderband verhindern, so dass ein manuelles Leeren des Übergangsbereichs nicht notwendig ist.

Jedoch kann es selbst bei einem mitlaufenden Transferhilfsförderer auf der Zuförderseite bei der Verarbeitung von klebrigen PET-Behältern zu Verklemmungen und somit zu Produktionsausfällen kommen. Zudem ist bei solch einem mitlaufenden Transferhilfsförderer der Kurvenradius eines Führungsgeländers vergleichsweise gering, so dass es zu einer stärkeren Abnutzung des Führungsgeländers kommen kann.

### Aufgabe

Der Erfindung liegt die Aufgabe zugrunde, eine Umlenkvorrichtung für einen Querförderer zur Verfügung zu stellen, die einen stabilen Betrieb bei möglichst geringen Verschleißerscheinungen an der Umlenkvorrichtung ermöglicht.

### Lösung

Die Aufgabe wird gelöst durch die Umlenkvorrichtung für Gegenstände nach Patentanspruch 1 und das Verfahren zum Umlenken von Gegenständen nach Patentanspruch 14. Bevorzugte Ausführungsformen sind in den Unteransprüchen offenbart.

Eine Umlenkvorrichtung für Gegenstände, wie Behälter, Flaschen, Gebinde, Gläser, Dosen, umfasst einen vorgeschalteten Förderer, der dazu ausgelegt ist, Gegenstände auf einer ersten Transportoberfläche in eine erste Transportrichtung zu transportieren und an einen nachgeschalteten Förderer zu übergeben. Der nachgeschaltete Förderer ist dazu ausgelegt, Gegenstände auf einer zweiten Transportoberfläche in eine zweite Transportrichtung zu transportieren, wobei die erste Transportrichtung und die zweite Transportrichtung zueinander senkrecht ausgerichtet und wobei die erste Transportoberfläche und die zweite Transportoberfläche im Wesentlichen koplanar sind. Weiter umfasst die Umlenkvorrichtung einen nachgeschalteten Hilfsförderer, der dazu ausgelegt ist, Gegenstände auf einer dritten Transportoberfläche in die zweite Transportrichtung zu transportieren, wobei der nachgeschaltete Hilfsförderer Seite-an-Seite zu dem nachgeschalteten Förderer und auf einer Seite zu dem vorgeschalteten Förderer angeordnet ist, wobei die zweite Transportoberfläche und die dritte Transportoberfläche koplanar sind.

Dadurch, dass die verschiedenen Transportoberflächen jeweils zumindest im Wesentlichen koplanar sind, ergibt sich bei einem Übergang von einer Transportoberfläche auf eine andere Transportoberfläche ein stabiler Stand der Gegenstände, da keine großen Höhenunterschiede überwunden werden müssen.

Der vorgeschaltete Förderer, der vorgeschaltete Hilfsförderer, der nachgeschaltete Förderer und der nachgeschaltete Hilfsförderer können als Endlosketten oder als Endlosbänder ausgebildet sein. Der vorgeschaltete Förderer und der nachgeschaltete Förderer werden hierbei jeweils mittels einer Antriebsachse angetrieben und über eine Umlenkachse umgelenkt. Für den Antrieb des nachgeschalteten Hilfsförderers können insbesondere die weiter unten beschriebenen Ausführungsformen verwendet werden.

Die Anordnung von Antriebsachse und Umlenkachse ist vorzugsweise derart, dass die durch den Förderer gebildete Transportoberfläche durch die Antriebsachse in die Transportrichtung gezogen wird. Es kann aber auch vorgesehen sein, dass die Antriebsachse und die Umlenkachse derart angeordnet sind, dass die durch den Förderer gebildete Transportoberfläche durch die Antriebsachse in die Transportrichtung geschoben wird.

Der nachgeschaltete Hilfsförderer ermöglicht im Gegensatz zu Anordnungen, die aus dem Stand der Technik bekannt sind, eine Abschwächung des sonst fast rechtwinklig verlaufenden Bereichs an der Innenseite des vorgeschalteten Förderers und des nachgeschalteten Förderers. Es kann ein kreisbogenförmiger Bereich oder ein Bereich mit einer gebogenen Linie vorgesehen werden.

Vorzugsweise ist die Transportgeschwindigkeit des vorgeschalteten Förderers gleich groß oder kleiner als die Transportgeschwindigkeit des nachgeschalteten Förderers, so dass es zu keinem Stau von Gegenständen bei der Übergabe und Umlenkung von der ersten Transportrichtung in die zweite Transportrichtung kommt.

Die Transportgeschwindigkeit des nachgeschalteten Hilfsförderers kann gleich groß wie oder kleiner als die Transportgeschwindigkeit des nachgeschalteten Förderers gewählt werden, da der nachgeschaltete Hilfsförderer an der Innenseite angeordnet ist.

Eine erste Breite des nachgeschalteten Hilfsförderers ist erfindungsmäßig um 50% bis 85%, vorzugsweise 50% bis 75%, kleiner sein als eine zweite Breite des nachgeschalteten Förderers. Die Bezeichnungen "erste" bzw. "zweite" werden hier für eine Unterscheidung der Breite des Hilfsförderers von der Breite des Förderers verwendet und besitzen sonst keine einschränkende Wirkung.

Die erste Breite des nachgeschalteten Hilfsförderers kann kleiner als die zweite Breite des nachgeschalteten Förderers gewählt werden, da der nachgeschaltete Hilfsförderer vor allem im Eckbereich, d.h. an der Innenseite von vorgeschaltetem Förderer und nachgeschaltetem Förderer, der Umlenkvorrichtung für eine Umlenkung von Gegenständen von der ersten Transportrichtung in die zweite Transportrichtung erforderlich ist. Zudem sollte die erste Breite des nachgeschalteten Hilfsförderers auch nicht zu groß gewählt werden, damit ein Gegenstand in einer angemessenen Zeitdauer von dem nachgeschalteten Hilfsförderer auf den nachgeschalteten Förderer gelangt.

Eine erste Länge des nachgeschalteten Hilfsförderers kann 5% bis 30%, vorzugsweise 10% bis 25% und besonders vorzugsweise 10% bis 20%, einer zweiten Länge des nachgeschalteten Förderers sein. Die Bezeichnungen "erste" bzw. "zweite" werden hier für eine Unterscheidung der Länge des Hilfsförderers von der Länge des Förderers verwendet und besitzen sonst keine einschränkende Wirkung.

Die erste Länge des nachgeschalteten Hilfsförderers kann kürzer als die zweite Länge des nachgeschalteten Förderers gewählt werden, da der nachgeschaltete Hilfsförderer nur im Bereich der Umlenkung erforderlich ist und sich somit nicht über die ganze Länge des nachgeschalteten Förderers erstrecken braucht. Es ist möglich, die erste Länge des nachgeschalteten Hilfsförderers in Abhängigkeit von einer Transportgeschwindigkeit des nachgeschalteten Hilfsförderers und/oder des nachgeschalteten Förderers zu wählen.

In einer ersten Ausführungsform kann die Umlenkvorrichtung weiter eine erste Antriebsvorrichtung des nachgeschalteten Hilfsförderers umfassen, die mit einer Umlenkachse des nachgeschalteten Förderers mittels einer Zahnradübersetzung in einem Bereich zwischen 1:1 bis 1:2, vorzugsweise zwischen 1:1 bis 1:1,5, gekoppelt ist.

Vorteilhafter Weise umfasst diese erste Ausführungsform eine zweite Antriebsvorrichtung, z.B. eine Antriebsachse, des nachgeschalteten Förderers, wobei die zweite Antriebsvorrichtung und die Umlenkachse derart angeordnet sind, dass die durch den nachgeschalteten Förderer umfasste zweite Transportoberfläche durch die zweite Antriebsvorrichtung in die zweite Transportrichtung gezogen wird. An der Umlenkachse des nachgeschalteten Förderers ist mindestens ein Kettenrad angeordnet. Dadurch steht an der Umlenkachse ein Drehmoment zur Verfügung, welches mittels der Zahnradübersetzung zur ersten Antriebsvorrichtung des nachgeschalteten Hilfsförderers gekoppelt wird.

Eine zweite Ausführungsform der Umlenkvorrichtung kann weiter eine erste Antriebsvorrichtung des nachgeschalteten Hilfsförderers umfassen, wobei zur Einkopplung eines Drehmoments des nachgeschalteten Hilfsförderers eine gemeinsame Antriebswelle des vorgeschalteten Förderers und des vorgeschalteten Hilfsförderers verwendet wird, wobei eine Verlängerung eines Endes der Antriebswelle über eine Lagerung hinaus vorgesehen ist und wobei die Verlängerung über eine Wellenkupplung und ein Winkelgetriebe mit der ersten Antriebsvorrichtung des nachgeschalteten Hilfsförderers verbunden ist. Die zweite Ausführungsform kann zudem eine zweite Antriebsvorrichtung, z.B. eine Antriebsachse, und eine Umlenkachse des nachgeschalteten Förderers umfassen, wobei diese zweite Antriebsvorrichtung und diese Umlenkachse derart angeordnet sind, dass die durch den nachgeschalteten Förderer umfasste zweite Transportoberfläche durch die Antriebsvorrichtung in die zweite Transportrichtung gezogen wird.

Eine dritte Ausführungsform der Umlenkvorrichtung kann weiter eine erste Antriebsvorrichtung des nachgeschalteten Hilfsförderers umfassen, wobei zur Einkopplung eines Drehmoments des nachgeschalteten Hilfsförderers eine Antriebswelle des vorgeschalteten Förderers verwendet wird. An der verlängerten gemeinsamen Antriebswelle des vorgeschalteten Förderers und des vorgeschalteten Hilfsförderers ist ein Winkelgetriebe angeordnet. Die erste Antriebsvorrichtung des nachgeschalteten Hilfsförderers wird mittels einer Zahnradübersetzung an einem Getriebeausgang des Winkelgetriebes angetrieben. Bei der Antriebswelle kann es sich auch um eine gemeinsame Antriebswelle des vorgeschalteten Förderers und eines vorgeschalteten Hilfsförderers handeln.

Die Getriebe- und/oder Zahnradübersetzung bietet zudem den Vorteil, dass jede gewünschte Geschwindigkeit des nachgeschalteten Hilfsförderers in Relation zur Geschwindigkeit des vorgeschalteten Förderers eingestellt werden kann.

In einer vierten Ausführungsform kann die Umlenkvorrichtung weiter eine erste Antriebsvorrichtung des nachgeschalteten Hilfsförderers umfassen, die mit einer zweiten Antriebsvorrichtung des nachgeschalteten Förderers mittels einer 1:1 Zahnradübersetzung gekoppelt ist. Somit kann eine Antriebsachse des nachgeschalteten Förderers auch für den nachgeschalteten Hilfsförderer verwendet werden. In diesem Fall wird keine separate Antriebsvorrichtung für den nachgeschalteten Hilfsförderer benötigt, und die Transportgeschwindigkeit des nachgeschalteten Hilfsförderers und des nachgeschalteten Förderers sind gleich.

In einer fünften Ausführungsform kann die Umlenkvorrichtung weiter eine erste Antriebsvorrichtung des nachgeschalteten Hilfsförderers umfassen, die mit einer zweiten Antriebsvorrichtung des nachgeschalteten Förderers mittels einer 1:1,5, 1:2, 1:3, 1:4 oder 1:5 Zahnradübersetzung gekoppelt ist.

Da der nachgeschaltete Hilfsförderer an der Innenseite der Umlenkvorrichtung angeordnet ist, kann seine Transportgeschwindigkeit kleiner sein als die Transportgeschwindigkeit des nachgeschalteten Förderers.

In einer sechsten Ausführungsform kann die Umlenkvorrichtung weiter eine erste Antriebsvorrichtung des nachgeschalteten Hilfsförderers umfassen, die unabhängig von einer zweiten Antriebsvorrichtung des nachgeschalteten Förderers ist. Im Falle dieser separaten Antriebsvorrichtung für den nachgeschalteten Hilfsförderer ist eine individuelle und angepasste Transportgeschwindigkeit des nachgeschalteten Hilfsförderers möglich, die beispielsweise an die Anzahl der Gegenstände, Gegenstandsabmessungen und dergleichen angepasst werden kann.

Die Umlenkvorrichtung kann einen zweiten nachgeschalteten Hilfsförderer umfassen, der dazu ausgelegt ist, Gegenstände auf einer fünften Transportoberfläche in die zweite Transportrichtung zu transportieren, wobei der zweite nachgeschaltete Hilfsförderer Seite-an-Seite zu dem ersten nachgeschalteten Hilfsförderer und auf einer Seite zu dem vorgeschalteten Förderer angeordnet ist, wobei die zweite Transportoberfläche und die fünfte Transportoberfläche koplanar sind.

Der zweite nachgeschaltete Hilfsförderer ermöglicht eine noch bessere Gegenstandsumlenkung von der ersten Transportrichtung in die zweite Transportrichtung, da an der Innenseite ein größerer Radius für das Innengeländer gewählt werden kann. Es ist möglich, dass für die beiden nachgeschalteten Hilfsförderer jeweils verschiedene Transportgeschwindigkeiten gewählt werden. Dazu können Hilfsantriebe oder passende Zahnradübersetzungen für die einzelnen nachgeschalteten Hilfsförderer verwendet werden.

Weiterhin kann die Umlenkvorrichtung ein statisches Überschubblech in einem Bereich zwischen dem vorgeschalteten Förderer mit dem nachgeschaltetem Hilfsförderer und dem nachgeschaltetem Förderer umfassen. Damit Gegenstände von dem vorgeschalteten Förderer an den nachgeschalteten Förderer bzw. den nachgeschalteten Hilfsförderer übergeben werden können, ist das statische Überschubblech vorgesehen, so dass ein Abstand zwischen dem vorgeschalteten Förderer und dem nachgeschalteten Förderer bzw. dem nachgeschalteten Hilfsförderer dadurch überbrückt wird. Solch eine Überbrückung ist bei Gegenständen mit einer kleinen Auflagefläche und/oder einem nachgeschalteten Förderer bzw. nachgeschalteten Hilfsförderer, die jeweils keinen kleinen Umknickradius im Bereich der Antriebsachse aufweisen erforderlich, damit Gegenstände nicht im Bereich des Abstands steckenbleiben und/oder umfallen oder dergleichen und dadurch einen fortlaufenden Transport und eine fortlaufende Umlenkung der Gegenstände erschweren bzw. verhindern würden. Vorteilhafterweise ist die Breite des Überschubblechs dabei kleiner als die Standfläche der transportierten Gegenstände, so dass zumindest immer ein Teil der Standfläche auch auf dem vorgeschalteten Förderer und/oder dem nachgeschalteten Förderer bzw. dem nachgeschalteten Hilfsförderer positioniert ist. Erfindungsgemäß umfasst die Umlenkvorrichtung weiter einen vorgeschalteten Hilfsförderer, der dazu ausgelegt ist, Gegenstände auf einer vierten Transportoberfläche in die erste Transportrichtung zu transportieren, wobei der vorgeschaltete Hilfsförderer Seite-an-Seite zu dem vorgeschalteten Förderer und auf einer Seite zu dem nachgeschalteten Förderer angeordnet ist, wobei die erste Transportoberfläche und die vierte Transportoberfläche koplanar sind.

Weiter kann die Umlenkvorrichtung ein Innengeländer umfassen, das sich von einer Innenseite des vorgeschalteten Förderers zu einer Innenseite des nachgeschalteten Förderers erstreckt. Je nach Aufbau der Umlenkvorrichtung verläuft das Innengeländer hierbei a) oberhalb der dritten Transportoberfläche des nachgeschalteten Hilfsförderers, b) oberhalb der dritten Transportoberfläche des nachgeschalteten Hilfsförderers und oberhalb der fünften Transportoberfläche des weiteren nachgeschalteten Hilfsförderers, c) oberhalb der dritten Transportoberfläche des nachgeschalteten Hilfsförderers und oberhalb der vierten Transportoberfläche des vorgeschalteten Hilfsförderers, d) oberhalb der dritten Transportoberfläche des nachgeschalteten Hilfsförderers, oberhalb der fünften Transportoberfläche des weiteren nachgeschalteten Hilfsförderers und oberhalb der vierten Transportoberfläche des vorgeschalteten Hilfsförderers, e) oberhalb der dritten Transportoberfläche des nachgeschalteten Hilfsförderers und oberhalb einer Oberfläche des statischen Überschubblechs, f) oberhalb der dritten Transportoberfläche des nachgeschalteten Hilfsförderers, oberhalb der fünften Transportoberfläche des weiteren nachgeschalteten Hilfsförderers und oberhalb der Oberfläche des statischen Überschubblechs.

Das Innengeländer kann hierbei einen Kreisbogen beschreiben. Durch die Ausführung als Kreisbogen kann der innere Eckbereich der Umlenkvorrichtung entschärft werden, d.h. der Übergang von dem vorgeschalteten Förderer zu dem nachgeschalteten Förderer ist nicht so abrupt. Das Innengeländer kann auch als gebogene Linie, vorteilhafter Weise als eine Kreislinie, ausgeführt sein. Der Vorteil liegt in einem größeren Radius verglichen mit dem bisherigen Stand der Technik. Dazu verläuft das Innengeländer nahezu über dem Eckpunkt zwischen dem vorgeschalteten Förderer oder vorgeschalteten Hilfsförderer und dem nachgeschalteten Hilfsförderer, so dass die gesamte Oberfläche der Förderer für den größtmöglichen Radius genutzt werden kann. Besonders vorteilhaft wird sogar das Geländer so geformt, dass nur die Standfläche der Behälter sich noch auf der gesamten Oberfläche der Förderer befindet und der seitliche breitere Überstand der Behälter im Bereich oberhalb der Standfläche sich schon außerhalb der Förderoberfläche befinden kann.

Die Umlenkvorrichtung kann weiter ein Außengeländer umfassen, das sich von einer Außenseite des vorgeschalteten Förderers zu einer Außenseite des nachgeschalteten Förderers erstreckt und dabei vorzugsweise einen Kreisbogen beschreibt, der besonders vorteilhaft im Wesentlichen parallel zum Innengeländer verläuft.

Beispielsweise kann bei Verwendung eines vorgeschalteten und nachgeschalteten Hilfsförderers mit einer Breite von X mm und einer Geländerbreite von Y mm für den vor- wie auch den nachgeschalteten Förderer das Innengeländer einen Radius von X +Y mm und das Außengeländer einen Radius von ca. X+2Y mm aufweisen.

Das Außen- und/oder das Innengeländer können eine Oberfläche aufweisen, die bei einem Kontakt mit der Oberfläche der Gegenstände nur eine kleine Reibung erzeugt, so dass Abnutzungserscheinungen minimiert werden.

Das Außengeländer kann mitlaufend ausgeführt sein, vorteilhafterweise mit einer Geschwindigkeit die gleich der Transportgeschwindigkeit des vorgeschalteten Förderers ist. Durch das Mitlaufen des Außengeländers wird ein noch kleinerer Übergangswiderstand gewährleistet. Hierbei kann das Außengeländer als Endlosband oder als eine Vielzahl angetriebener Röllchen ausgebildet sein.

Weiter betrifft die Erfindung ein Verfahren zum Umlenken von Gegenständen, wie Behältern, Flaschen, Gebinden, Gläsern, mit einer Umlenkvorrichtung wie oben oder weiter unten beschrieben.

Die beigefügten Figuren stellen beispielhaft zum besseren Verständnis und zur Veranschaulichung Aspekte der Erfindung dar. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es zeigt:
Figur 1 eine schematische Ansicht einer Umlenkvorrichtung aus dem Stand der Technik,
Figur 2 eine schematische Ansicht einer Umlenkvorrichtung mit einem nachgeschalteten Hilfsförderer,
Figur 3 eine schematische Ansicht einer Umlenkvorrichtung mit einem statischen Überschubblech und einem nachgeschalteten Hilfsförderer,
Figur 4 eine schematische Ansicht einer erfindungsgemäßen Ausführungsform einer Umlenkvorrichtung mit einem vor- und einem nachgeschalteten Hilfsförderer,
Figur 5 eine schematische Ansicht einer Ausführungsform einer Umlenkvorrichtung mit einem vor- und zwei nachgeschalteten Hilfsförderern und
Figur 6 eine schematische Ansicht einer Ausführungsform einer Umlenkvorrichtung mit einer Antriebskopplung des nachgeschalteten Hilfsförderers mit dem vorgeschalteten Förderer.

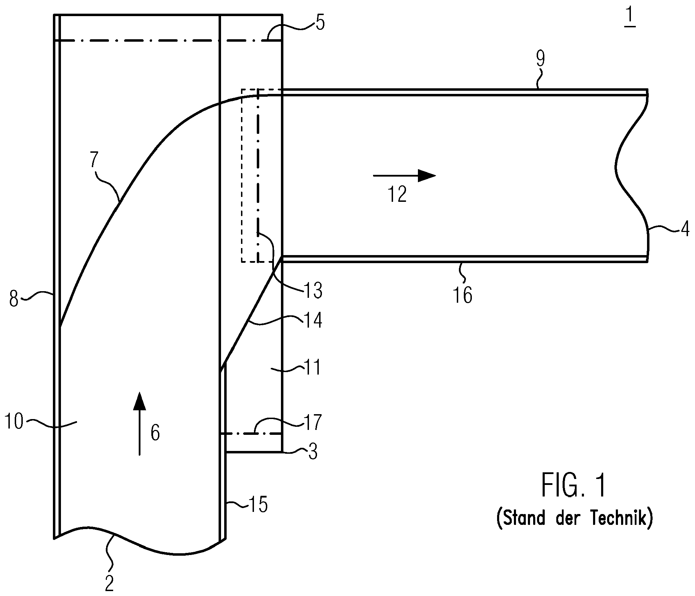

Figur 1 zeigt eine Umlenkvorrichtung 1 wie sie aus dem Stand der Technik bekannt ist, umfassend einen vorgeschalteten Förderer 2, ein Überschubblech 3 oder einen vorgeschalteten Hilfsförderer 3, die jeweils Seite-an-Seite zu dem vorgeschalteten Förderer 2 und zudem auf einer Seite hin zu einem nachgeschalteten Förderer 4 angeordnet sind. Der vorgeschaltete Förderer 2 kann hierbei ein umlaufendes endloses Band oder eine Kette sein. In der Darstellung erfolgt ein Antrieb des vorgeschalteten Förderers 2 über eine Antriebsachse 5. Die zum Antrieb benötigten Elemente wie Motor und dergleichen zusammen mit der Antriebsachse 5 werden auch als Antriebsvorrichtung bezeichnet. In Figur 1 ist die zweite Achse, um die das endlose Band oder die Kette des vorgeschalteten Förderers 2 verläuft nicht dargestellt. Gegenstände, die von dem vorgeschalteten Förderer 2 in die erste Transportrichtung 6 auf der Transportoberfläche 10 transportiert werden, treffen auf das Außengeländer 7, wodurch die Gegenstände zu dem nachgeschalteten Förderer 4 geleitet werden. Das Außengeländer 7 erstreckt sich von einer Außenseite 8 des vorgeschalteten Förderers 2 zu einer Außenseite 9 des nachgeschalteten Förderers 4 und verläuft dabei oberhalb der Transportoberfläche 10 des vorgeschalteten Förderers 2 und oberhalb der Transportoberfläche 11 des Überschubblechs 3 bzw. des vorgeschalteten Hilfsförderers 3.

Der nachgeschaltete Förderer 4 ist im rechten Winkel zu dem vorgeschalteten Förderer 2 angeordnet und transportiert umgelenkete Gegenstände in eine zweite Transportrichtung 12, die senkrecht zu der ersten Transportrichtung 6 verläuft. Der nachgeschaltete Förderer 4 kann hierbei ebenfalls ein umlaufendes endloses Band oder eine Kette sein. In der Darstellung erfolgt ein Antrieb des nachgeschalteten Förderers 4 über eine entsprechende Antriebsachse 13. In Figur 1 ist die zweite Achse des nachgeschalteten Förderers 4, um die das endlose Band oder die Kette verläuft, nicht dargestellt.

Damit Gegenstände von dem vorgeschalteten Förderer 2 an den nachgeschalteten Förderer 4 übergeben werden können, ist zudem das statische Überschubblech 3 oder der vorgeschaltete Hilfsförderer 3 vorgesehen, so dass ein Abstand, der sonst zwischen dem vorgeschalteten Förderer 2 und dem nachgeschalteten Förderer 4 vorhanden wäre, durch das statische Überschubblech 3 oder den vorgeschalteten Hilfsförderer 3 überbrückt werden kann. Solch eine Überbrückung ist beispielsweise bei Gegenständen mit einer kleinen Auflagefläche und/oder einem nachgeschalteten Förderer 4, der keinen kleinen Umknickradius im Bereich der Antriebsachse 13 aufweist, erforderlich bzw. wünschenswert, damit Gegenstände nicht im Bereich eines solchen Abstands steckenbleiben, umfallen und/ oder dergleichen und somit einen fortlaufenden Transport und/oder Umlenkung der Gegenstände nicht erschweren bzw. verhindern. Ein Innengeländer 14 erstreckt sich von einer Innenseite 15 des vorgeschalteten Förderers 2 zu einer Innenseite 16 des nachgeschalteten Förderers 4 und verläuft dabei oberhalb der Transportoberfläche 10 des vorgeschalteten Förderers 2 und der Transportoberfläche 11 des Überschubblechs 3 bzw. des vorgeschalteten Hilfsförderers 3.

Ein statisches Überschubblech 3 weist vorteilhafterweise eine Breite auf, die kleiner als die kleinste Längenausdehnung der Standfläche der zu transportierenden Gegenstände, damit es zu keinem Stehenbleiben von Gegenständen auf dem Überschubblech 3 kommt.

Eine Förderfläche für den Transport von Gegenständen in der Umlenkvorrichtung 1 erstreckt sich zwischen dem Außengeländer 7 und dem Innengeländer 14. Die Förderfläche umfasst somit Teile der Transportoberfläche 10 des vorgeschalteten Förderers 2, Teile der Transportoberfläche 11 des Überschubblechs 3 und Teile der Transportoberfläche des nachgeschalteten Förderers 4.

Umfasst die Umlenkvorrichtung 1, die aus dem Stand der Technik bekannt ist, statt des statischen Überschubblechs 3 einen vorgeschalteten Hilfsförderer 3, so ist dieser als endloses Band oder als Kette ausgeführt und kann beispielsweise über die Antriebsachse 5 des vorgeschalteten Förderers 2 mit angetrieben werden. Das Band bzw. die Kette verläuft zudem über eine zweite Achse 17. Es kann auch ein separater Antrieb für den vorgeschalteten Hilfsförderer 3 vorgesehen sein. Der vorgeschaltete Hilfsförderer 3 transportiert Gegenstände ebenfalls in die erste Transportrichtung 6.

Für den Transport von Gegenständen weist diese Ausführungsform der Umlenkvorrichtung 1 eine Förderfläche für die Gegenstände auf, die sich zwischen dem Außengeländer 7 und dem Innengeländer 14 erstreckt und Teile der Transportoberfläche 10 des vorgeschalteten Förderers 2, Teile der Transportoberfläche 11 des vorgeschalteten Hilfsförderers 3 und Teile der Transportoberfläche des nachgeschalteten Förderers 4 umfasst.

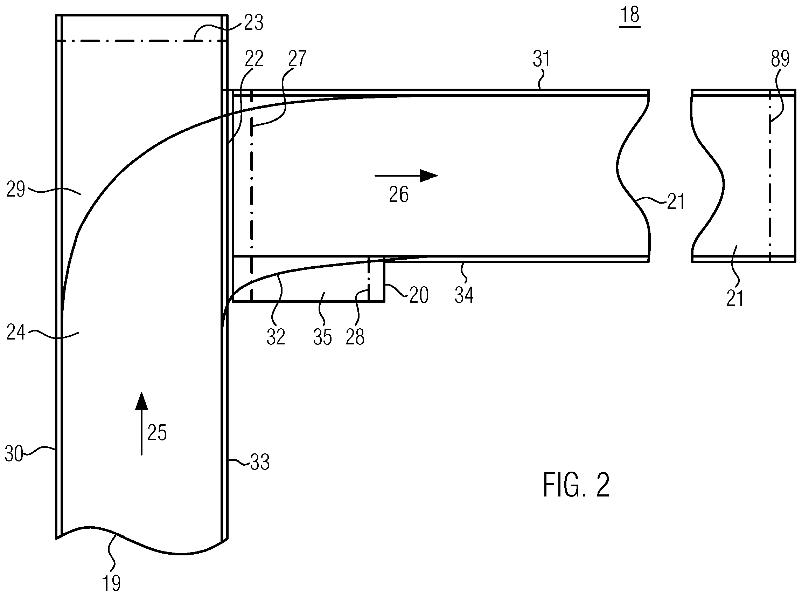

Figur 2 zeigt eine Umlenkvorrichtung 18 umfassend einen vorgeschalteten Förderer 19, einen nachgeschalteten Hilfsförderer 20 und einen nachgeschalteten Förderer 21. Zwischen dem vorgeschalteten Förderer 19 und dem nachgeschalteten Hilfsförderer 20 bzw. dem nachgeschalteten Förderer 21 besteht jeweils ein Abstand 22, der sich aus den baulichen Begebenheiten des nachgeschalteten Hilfsförderers 20 bzw. des nachgeschalteten Förderers 21 ergibt. Der nachgeschaltete Hilfsförderer 20 und der nachgeschaltete Förderer 21 sind als umlaufende Endlosbänder bzw. Endlosketten ausgeführt, die einen endlichen Umknickradius im Bereich einer Umlenkachse 27 aufweisen.

Beispielsweise kann auch vorgesehen sein, dass der nachgeschaltete Förderer 21 aus mehreren nebeneinander angeordneten und verbundenen Modulen oder Bändern aufgebaut ist, die eine zusammenhängende Fläche bilden und in ihrer Gesamtheit als nachgeschalteter Förderer 21 bezeichnet werden.

Werden Ketten verwendet, so kann der Abstand 22 um so kleiner ausfallen, je kleiner die Kettenteilung ist, da dann der Umknickradius der Kette entsprechend klein ist und nachgeschalteter Förderer 21 bzw. nachgeschalteter Hilfsförderer 20 nahe an den vorgeschalteten Förderer positioniert 19 werden können.

In der Darstellung erfolgt ein Antrieb des vorgeschalteten Förderers 19 über eine Antriebsachse 23, so dass Gegenstände auf einer Transportoberfläche 24 des vorgeschalteten Förderers in eine erste Transportrichtung 25 transportiert werden. Die zum Antrieb benötigten Elemente wie Motor und dergleichen zusammen mit der Antriebsachse 23 werden auch als Antriebsvorrichtung bezeichnet. In Figur 2 ist die zweite Achse, um die das endlose Band oder die Kette des vorgeschalteten Förderers 19 verläuft nicht dargestellt.

Der nachgeschaltete Förderer 21 und der nachgeschaltete Hilfsförderer 20 sind im rechten Winkel zu dem vorgeschalteten Förderer 19 angeordnet und transportieren von dem vorgeschalteten Förderer 19 übergebene und umgelenkete Gegenstände in eine zweite Transportrichtung 26, die senkrecht zu der ersten Transportrichtung 25 verläuft. Der nachgeschaltete Förderer 21 kann hierbei ebenfalls ein umlaufendes endloses Band oder eine Kette sein. In der Darstellung erfolgt ein Antrieb des nachgeschalteten Förderers 21 über die entsprechende Antriebsachse 89. In Figur 2 ist die zweite Achse des nachgeschalteten Förderers 21, um die das endlose Band oder die Kette verläuft, als gemeinsame Umlenkachse 27 mit dem nachgeschalteten Hilfsförderer 20 dargestellt. Der nachgeschaltete Hilfsförderer 20 ist als endloses Band oder als Kette ausgeführt und kann beispielsweise über eine Antriebsachse 28 angetrieben werden. Das Band bzw. die Kette verläuft ebenso über die gemeinsame Umlenkachse 27.

An dieser Umlenkachse 27 ist mindestens ein Kettenrad im Zugbereich des nachgeschalteten Förderers 21 befestigt. Dadurch steht an der Umlenkachse 27 ein Drehmoment zur Verfügung, welches mittels einer Zahnradübersetzung (nicht gezeigt) zur Antriebsachse 28 des nachgeschalteten Hilfsförderers 20 gekoppelt wird.

Es kann auch vorgesehen sein, dass ein Antrieb des nachgeschalteten Förderers 20 unabhängig von der Antriebsachse 89 des nachgeschalteten Förderers 21 bzw. unabhängig von der gemeinsamen Umlenkachse 27 erfolgt, beispielsweise mittels eines Hilfsmotors. Gegenstände, die von dem vorgeschalteten Förderer 19 in die erste Transportrichtung 25 transportiert werden, treffen auf ein Außengeländer 29, wodurch die Gegenstände zu dem nachgeschalteten Förderer 21 und eventuell zu dem nachgeschalteten Hilfsförderer 20 geleitet werden. Das Außengeländer 29 erstreckt sich von einer Außenseite 30 des vorgeschalteten Förderers 19 zu einer Außenseite 31 des nachgeschalteten Förderers 21 und verläuft dabei oberhalb der Transportoberfläche 24 des vorgeschalteten Förderers 19.

Ein Innengeländer 32 erstreckt sich von einer Innenseite 33 des vorgeschalteten Förderers 19 zu einer Innenseite 34 des nachgeschalteten Förderers 21 und verläuft dabei oberhalb der Transportoberfläche 35 des nachgeschalteten Hilfsförderers 20. Das Innengeländer 32 sorgt dafür, dass Gegenstände von der Transportoberfläche 35 des nachgeschalteten Hilfsförderers 20 auf den nachgeschalteten Förderer 21 geleitet werden.

Für den Transport von Gegenständen ergibt sich für diese Umlenkvorrichtung 18 somit eine Förderfläche für die Gegenstände, die sich zwischen dem Außengeländer 29 und dem Innengeländer 32 erstreckt und Teile der Transportoberfläche 24 des vorgeschalteten Förderers 19, Teile der Transportoberfläche 35 des nachgeschalteten Hilfsförderers 20 und Teile der Transportoberfläche des nachgeschalteten Förderers 21 umfasst.

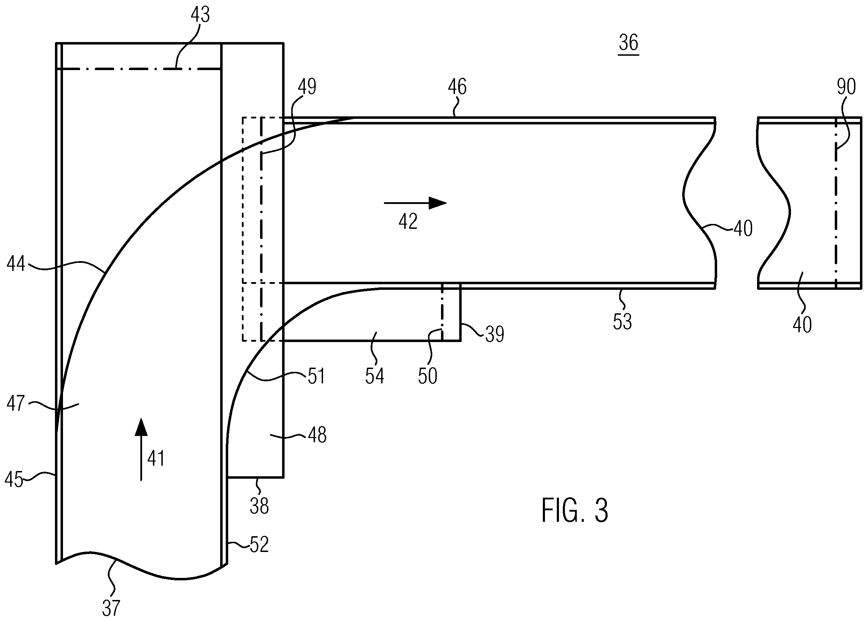

Figur 3 zeigt eine Umlenkvorrichtung 36 umfassend einen vorgeschalteten Förderer 37, ein statisches Überschubblech 38, einen nachgeschalteten Hilfsförderer 39 und einen nachgeschalteten Förderer 40. Das statische Überschubblech 38 ist vorgesehen, so dass ein Abstand zwischen dem vorgeschalteten Förderer 37 und dem nachgeschalteten Förderer 40 und dem nachgeschalteten Hilfsförderer 39 durch das statische Überschubblech 38 überbrückt wird. Solch eine Überbrückung ist beispielsweise bei Gegenständen mit einer kleinen Auflagefläche und/oder einem nachgeschalteten Förderer 40 bzw. nachgeschalteten Hilfsförderer 39, die keinen kleinen Umknickradius aufweisen erforderlich bzw. wünschenswert, damit Gegenstände nicht im Bereich des sonst vorhandenen Abstands steckenbleiben und/oder umfallen oder dergleichen und somit einen fortlaufenden Transport und eine fortlaufende Umlenkung der Gegenstände erschweren bzw. verhindern. Das statische Überschubblech 38 weist vorteilhafterweise eine Breite auf, die kleiner als die kleinste Längenausdehnung der Standfläche der zu transportierten Gegenstände, damit es zu keinem Stehenbleiben von Gegenständen auf dem Überschubblech 38 kommt.

Der vorgeschaltete Förderer 37 kann hierbei ein umlaufendes endloses Band oder eine Kette sein. In der Darstellung erfolgt ein Antrieb des vorgeschalteten Förderers 37 über eine Antriebsachse 43. In Figur 3 ist die zweite Achse, um die das endlose Band oder die Kette des vorgeschalteten Förderers 37 verläuft nicht dargestellt. Gegenstände, die von dem vorgeschalteten Förderer 37 in die erste Transportrichtung 41 transportiert werden, treffen auf
das Außengeländer 44, wodurch die Gegenstände über das statische Überschubblech 38 zu dem nachgeschalteten Förderer 40 und eventuell zu dem nachgeschalteten Hilfsförderer 39 geleitet werden. Das Außengeländer 44 erstreckt sich von einer Außenseite 45 des vorgeschalteten Förderers 37 zu einer Außenseite 46 des nachgeschalteten Förderers 40 und verläuft dabei oberhalb der Transportoberfläche 47 des vorgeschalteten Förderers 37 und oberhalb der Transportoberfläche 48 des Überschubblechs 38.

Der nachgeschaltete Förderer 40 und der nachgeschaltete Hilfsförderer 39 sind im rechten Winkel zu dem vorgeschalteten Förderer 37 angeordnet und transportieren vom Überschubblech 38 übergebene und umgelenkete Gegenstände in eine zweite Transportrichtung 42, die senkrecht zu der ersten Transportrichtung 41 verläuft. Der nachgeschaltete Förderer 40 kann hierbei ebenfalls ein umlaufendes endloses Band oder eine Kette sein. In der Darstellung erfolgt ein Antrieb des nachgeschalteten Förderers 40 über eine entsprechende Antriebsachse 54. Der nachgeschaltete Hilfsförderer 39 ist als endloses Band oder als Kette ausgeführt und kann über die gemeinsame Umlenkachse 49 des nachgeschalteten Förderers 40 und des nachgeschalteten Hilfsförderers 54 mit angetrieben werden.

An dieser Umlenkachse 49 selbst ist mindestens ein Kettenrad im Zugbereich des nachgeschalteten Förderers 40 befestigt. Dadurch steht an der Umlenkachse 49 ein Drehmoment zur Verfügung, welches mittels einer Zahnradübersetzung (nicht gezeigt) zur Antriebsachse 50 des nachgeschalteten Hilfsförderers 54 gekoppelt wird. Es kann auch vorgesehen sein, dass ein Antrieb des nachgeschalteten Förderers 39 unabhängig von der Antriebsachse 90 des nachgeschalteten Förderers 40 erfolgt, beispielsweise mittels eines Hilfsmotors.

Ein Innengeländer 51 erstreckt sich von einer Innenseite 52 des vorgeschalteten Förderers 37 zu einer Innenseite 53 des nachgeschalteten Förderers 40 und verläuft dabei oberhalb der Transportoberfläche 48 des Überschubblechs 38 und der Transportoberfläche 54 des nachgeschalteten Hilfsförderers 39. Das Innengeländer 51 sorgt dafür, dass Gegenstände von der Transportoberfläche 54 des nachgeschalteten Hilfsförderers 39 auf den nachgeschalteten Förderer 40 geleitet werden.

Diese Umlenkvorrichtung 36 weist für den Transport von Gegenständen somit eine Förderfläche für die Gegenstände auf, die sich zwischen dem Außengeländer 44 und dem Innengeländer 51 erstreckt und Teile der Transportoberfläche 47 des vorgeschalteten Förderers 37, Teile der Transportoberfläche 48 des Überschubblechs 38, Teile der Transportoberfläche 54 des nachgeschalteten Hilfsförderers 39 und Teile der Transportoberfläche des nachgeschalteten Förderers 40 umfasst.

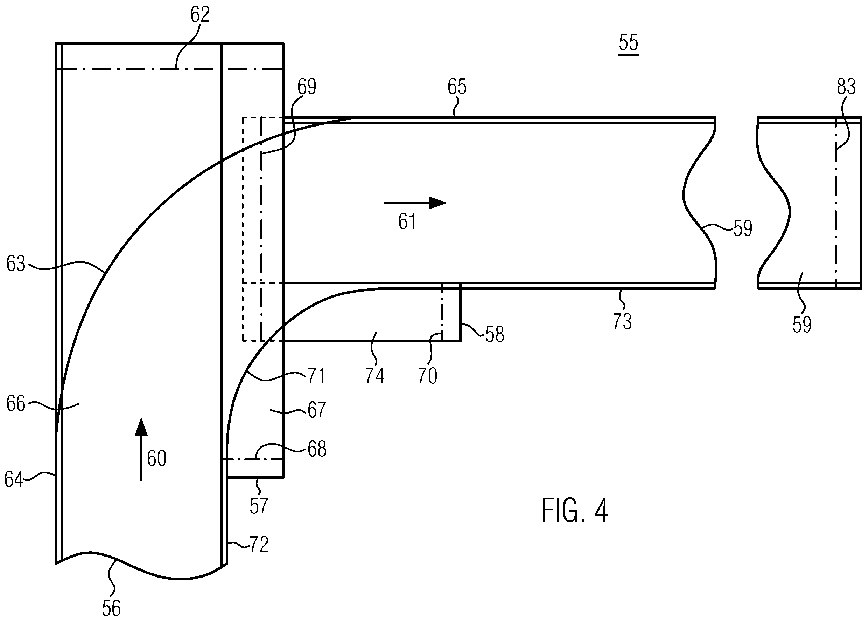

Figur 4 zeigt eine schematische Ansicht einer erfindungsgemäßen Ausführungsform einer Umlenkvorrichtung 55 umfassend einen vorgeschalteten Förderer 56, einen vorgeschalteten Hilfsförderer 57, einen nachgeschalteten Hilfsförderer 58 und einen nachgeschalteten Förderer 59.

Der vorgeschaltete Förderer 56 kann hierbei ein umlaufendes endloses Band oder eine Kette sein. In der Darstellung erfolgt ein Antrieb des vorgeschalteten Förderers 56 über eine Antriebsachse 62. In Figur 4 ist die zweite Achse, um die das endlose Band oder die Kette des vorgeschalteten Förderers 56 verläuft nicht dargestellt. Gegenstände, die von dem vorgeschalteten Förderer 56 auf der Transportoberfläche 66 in die erste Transportrichtung 60 transportiert werden, treffen auf das Außengeländer 63, wodurch die Gegenstände über den vorgeschalteten Hilfsförderer 57 zu dem nachgeschalteten Förderer 59 und eventuell zu dem nachgeschalteten Hilfsförderer 58 geleitet werden. Das Außengeländer 63 erstreckt sich von einer Außenseite 64 des vorgeschalteten Förderers 56 zu einer Außenseite 65 des nachgeschalteten Förderers 59 und verläuft dabei oberhalb der Transportoberfläche 66 des vorgeschalteten Förderers 56 und oberhalb der Transportoberfläche 67 des vorgeschalteten Hilfsförderers 57. Der vorgeschaltete Hilfsförderer 57 ist als endloses Band oder als Kette ausgeführt und kann über die Antriebsachse 62 des vorgeschalteten Förderers 56 mit angetrieben werden. Das Band bzw. die Kette verläuft zudem über eine zweite Achse 68. Es kann auch vorgesehen sein, dass ein Antrieb des vorgeschalteten Hilfsförderers 57 unabhängig von der Antriebsachse 62 des vorgeschalteten Förderers 56 erfolgt, beispielsweise mittels eines Hilfsmotors.

Damit Gegenstände von dem vorgeschalteten Förderer 56 an den nachgeschalteten Förderer 59 bzw. nachgeschalteten Hilfsförderer 58 übergeben werden können, ist der vorgeschaltete Hilfsförderer 57 vorgesehen, so dass ein Abstand zwischen dem vorgeschalteten Förderer 56 und dem nachgeschalteten Förderer 59 und dem nachgeschalteten Hilfsförderer 58 durch den vorgeschalteten Hilfsförderer 57 überbrückt wird. Der nachgeschaltete Förderer 59 und der nachgeschaltete Hilfsförderer 58 sind im rechten Winkel zu dem vorgeschalteten Förderer 56 und dem vorgeschalteten Hilfsförderer 57 angeordnet und transportieren umgelenkete Gegenstände in eine zweite Transportrichtung 61, die senkrecht zu der ersten Transportrichtung 60 verläuft. Der nachgeschaltete Förderer 59 kann hierbei ebenfalls ein umlaufendes endloses Band oder eine Kette sein. In der Darstellung erfolgt ein Antrieb des nachgeschalteten Förderers 59 über eine entsprechende Antriebsachse 83. Der nachgeschaltete Hilfsförderer 58 ist als endloses Band oder als Kette ausgeführt und kann über die gemeinsame Umlenkachse 69 des nachgeschalteten Förderers 59 und des nachgeschalteten Hilfsförderers 58 mit angetrieben werden.

An dieser Umlenkachse 69 selbst ist mindestens ein Kettenrad im Zugbereich des nachgeschalteten Förderers 59 befestigt. Dadurch steht an der Umlenkachse 69 ein Drehmoment
zur Verfügung, welches mittels einer Zahnradübersetzung (nicht gezeigt) zur Antriebsachse 70 des nachgeschalteten Hilfsförderers 58 gekoppelt wird. Es kann auch vorgesehen sein, dass ein Antrieb des nachgeschalteten Förderers 58 unabhängig von der Antriebsachse 69 des nachgeschalteten Förderers 59 erfolgt, beispielsweise mittels eines Hilfsmotors.

Ein Innengeländer 71 erstreckt sich von einer Innenseite 72 des vorgeschalteten Förderers 56 zu einer Innenseite 73 des nachgeschalteten Förderers 59 und verläuft dabei oberhalb der Transportoberfläche 67 des vorgeschalteten Hilfsförderers 57 und der Transportoberfläche 74 des nachgeschalteten Hilfsförderers 58. Das Innengeländer 71 sorgt dafür, dass Gegenstände von der Transportoberfläche 74 des nachgeschalteten Hilfsförderers 58 auf den nachgeschalteten Förderer 59 geleitet werden.

Die Umlenkvorrichtung 55 weist für den Transport von Gegenständen eine Förderfläche für die Gegenstände auf, die sich zwischen dem Außengeländer 63 und dem Innengeländer 71 erstreckt und Teile der Transportoberfläche 66 des vorgeschalteten Förderers 56, Teile der Transportoberfläche 67 des vorgeschalteten Hilfsförderers 57, Teile der Transportoberfläche 74 des nachgeschalteten Hilfsförderers 58 und Teile der Transportoberfläche des nachgeschalteten Förderers 59 umfasst.

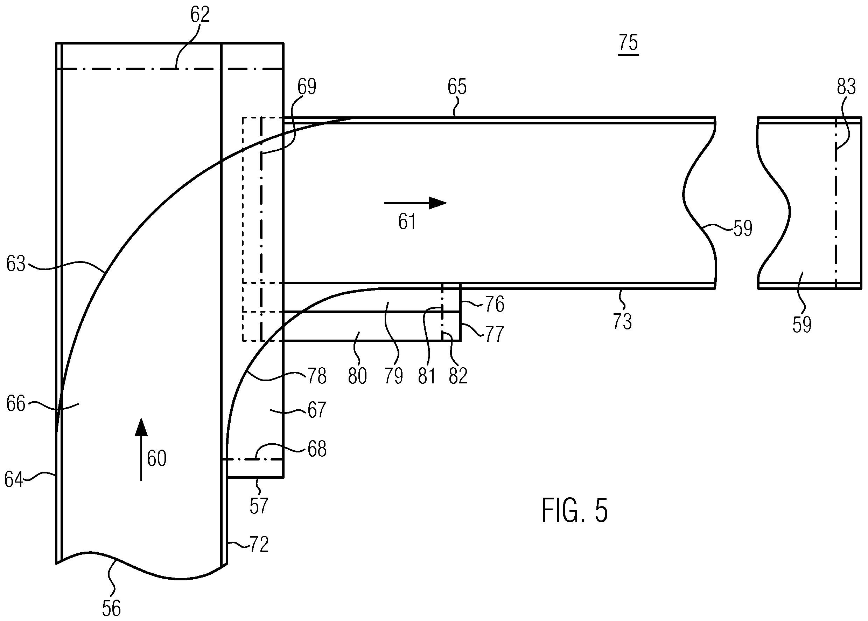

Figur 5 zeigt eine Ausführungsform einer Umlenkvorrichtung 75, die im Wesentlichen der Ausführungsform aus Figur 4 entspricht. Jedoch sind anstatt einem nachgeschalteten Hilfsförderer zwei nachgeschaltete Hilfsförderer 76, 77 vorhanden. Die beiden nachgeschalteten Hilfsförderer 76, 77 sind dabei ebenfalls so angeordnet, dass sie teilweise unterhalb des vorgeschalteten Hilfsförderers 57 verlaufen. Die Verwendung von zwei nachgeschalteten Hilfsförderern 76, 77 ermöglicht eine noch bessere Gegenstandsumlenkung von der ersten Transportrichtung 60 in die zweite Transportrichtung 61, da für das Innengeländer 78 ein größerer Radius gewählt werden kann. Das Innengeländer 78 erstreckt sich von einer Innenseite 72 des vorgeschalteten Förderers 56 zu einer Innenseite 73 des nachgeschalteten Förderers 59 und verläuft dabei oberhalb der Transportoberfläche 67 des vorgeschalteten Hilfsförderers 57, der Transportoberfläche 79 des ersten nachgeschalteten Hilfsförderers 76 und der Transportoberfläche 80 des zweiten nachgeschalteten Hilfsförderers 77.

Einer oder beide nachgeschaltete Hilfsförderer 76, 77 können mittels der Umlenkachse 69 des nachgeschalteten Förderers 59 angetrieben werden. Es kann aber auch vorgesehen sein, dass einer oder beide nachgeschaltete Hilfsförderer 76, 77 unabhängig von der Umlenkachse 69 des nachgeschalteten Förderers 59 angetrieben werden, beispielsweise mittels eines oder mehrerer Hilfsmotoren. So könnten auch unterschiedliche Transportgeschwindigkeiten für die zwei nachgeschalteten Förderer 76, 77 gewählt werden. Die beiden nachgeschalteten Hilfsförderer 76, 77 verlaufen zudem jeweils über weitere Achsen 81, 82.

Für den Transport von Behältern ergibt sich für diese Umlenkvorrichtung 75 eine Förderfläche dieser Umlenkvorrichtung 75 für den Transport von Gegenständen, die sich zwischen dem Außengeländer 63 und dem Innengeländer 78 erstreckt und Teile der Transportoberfläche 66 des vorgeschalteten Förderers 56, Teile der Transportoberfläche 67 des vorgeschalteten Hilsförderers 57, Teile der Transportoberfläche 79 des ersten nachgeschalteten Hilfsförderers 76, Teile der Transportoberfläche 80 des zweiten nachgeschalteten Hilfsförderers 77 und Teile der Transportoberfläche des nachgeschalteten Förderers 59 umfasst.

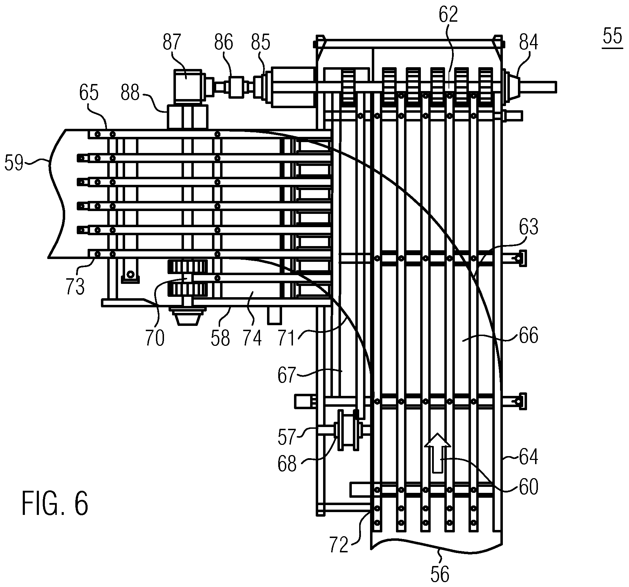

Figur 6 zeigt eine Ausführungsform einer Umlenkvorrichtung 55, die im Wesentlichen der Ausführungsform aus Figur 4 entspricht. Jedoch ist anstatt einer Antriebskopplung des nachgeschalteten Hilfsförderers 58 mit dem nachgeschalteten Förderer 59 eine Antriebskopplung des nachgeschalteten Hilfsförderers 58 mit dem vorgeschalteten Förderer 56 gegeben. Dabei wird die Antriebsachse 62 des vorgeschalteten Förderers 56 als Drehmomentquelle genutzt. Mittels eines form- oder kraftschlüssigen Abgriffs an der Verlängerung der Antriebsachse 62 wird fluchtend ein Winkelgetriebe 87 montiert. Damit eventuelle Fluchtfehler keine Auswirkung auf die Lagerung 84, 85 der Antriebsachse 62 haben, wird vorteilhafter Weise zwischen der Achsenverlängerung der Antriebsachse 62 und der Eingangsseite am Winkelgetriebe 87 eine Wellenkupplung gesetzt. Ausgangsseitig wird durch das Winkelgetriebe 87 die Antriebsachse 70 des nachgeschalteten Hilfsförderers 58 angetrieben. Dadurch ist eine kompakte und günstige Bauform möglich.

Für eine optimierte Getriebeübersetzung liegt die Übersetzung im Bereich zwischen 1:1 bis 1:2, vorzugsweise zwischen 1:1 bis 1:1,5.

Des Weiteren kann eine Seite der Wellenlagerung der Antriebsachse 70 des nachgeschalteten Hilfsförderers 58 mit einer Drehmomentstütze 88 kombiniert werden; vorzugsweise ist das Wellenlager an der Drehmomentstütze 88 direkt befestigt.

## Patentansprüche

1. Umlenkvorrichtung (18, 36, 55, 75) für Gegenstände, wie Behälter, Flaschen, Gebinde, Gläser, Dosen, umfassend:
- einen vorgeschalteten Förderer (19, 37, 56), der dazu ausgelegt ist, Gegenstände auf einer ersten Transportoberfläche (24, 47, 66) in eine erste Transportrichtung (25, 41, 60) zu transportieren und an einen nachgeschalteten Förderer (21, 40, 59) zu übergeben,
- den nachgeschalteten Förderer (21, 40, 59), der dazu ausgelegt ist, Gegenstände auf einer zweiten Transportoberfläche in eine zweite Transportrichtung (26, 42, 61) zu transportieren, wobei die erste Transportrichtung (25, 41, 60) und die zweite Transportrichtung (26, 42, 61) zueinander senkrecht ausgerichtet sind und wobei die erste Transportoberfläche (24, 47, 66) und die zweite Transportoberfläche im Wesentlichen koplanar sind,
- einen nachgeschalteten Hilfsförderer (20, 39, 58, 76), der dazu ausgelegt ist, Gegenstände auf einer dritten Transportoberfläche (35, 54, 74, 79) in die zweite Transportrichtung (26, 42, 61) zu transportieren, wobei der nachgeschaltete Hilfsförderer (20, 39, 58, 76) Seite-an-Seite zu dem nachgeschalteten Förderer (21, 40, 59) und auf einer Seite zu dem vorgeschalteten Förderer (19, 37, 56) angeordnet ist, wobei die zweite Transportoberfläche und die dritte Transportoberfläche (35, 54, 74, 79) koplanar sind,
**gekennzeichnet durch**
einen vorgeschalteten Hilfsförderer (57), der dazu ausgelegt ist, Gegenstände auf einer vierten Transportoberfläche (67) in die erste Transportrichtung (60) zu transportieren, wobei der vorgeschaltete Hilfsförderer (57) Seite-an-Seite zu dem vorgeschalteten Förderer (56) und auf einer Seite zu dem nachgeschalteten Förderer (59) angeordnet ist, wobei die erste Transportoberfläche (66) und die vierte Transportoberfläche (67) koplanar sind und
wobei eine erste Breite des nachgeschalteten Hilfsförderers (20, 39, 58, 76) um 50% bis 85% kleiner ist als eine zweite Breite des nachgeschalteten Förderers (21, 40, 59).

2. Umlenkvorrichtung nach Anspruch 1, wobei die erste Breite des nachgeschalteten Hilfsförderers (20, 39, 58, 76) um 50% bis 75% kleiner ist als die zweite Breite des nachgeschalteten Förderers (21, 40, 59).

3. Umlenkvorrichtung nach Anspruch 1 oder 2, wobei eine erste Länge des nachgeschalteten Hilfsförderers (20, 39, 58, 76) 5% bis 30%, vorzugsweise 10% bis 25%, einer zweiten Länge des nachgeschalteten Förderers (21, 40, 59) ist.

4. Umlenkvorrichtung nach einem der Ansprüche 1 bis 3 weiter umfassend eine erste Antriebsvorrichtung des nachgeschalteten Hilfsförderers (20, 39, 58, 76), die mit einer Umlenkachse (27, 49, 69) des nachgeschalteten Förderers (21, 40, 59) mittels einer Zahnradübersetzung in einem Bereich von 1:1 bis 1:2, vorzugsweise 1:1 bis 1:1,5, gekoppelt ist.

5. Umlenkvorrichtung nach Anspruch 4 weiter umfassend eine zweite Antriebsvorrichtung (83, 89, 90) des nachgeschalteten Förderers (21, 40, 59), wobei zweite Antriebsvorrichtung (83, 89, 90) und die Umlenkachse (27, 49, 69) derart angeordnet sind, dass die durch den nachgeschalteten Förderer (21, 40, 59) umfasste zweite Transportoberfläche durch die zweite Antriebsvorrichtung (83, 89, 90) in die zweite Transportrichtung (26, 42, 61) gezogen wird, wobei an der Umlenkachse (27, 49, 69) mindestens ein Kettenrad angeordnet ist und wobei ein dadurch zur Verfügung stehendes Drehmoment mittels der Zahnradübersetzung zur ersten Antriebsvorrichtung des nachgeschalteten Hilfsförderers (20, 39, 58, 76) gekoppelt ist.

6. Umlenkvorrichtung nach einem der Ansprüche 1 bis 3 weiter umfassend eine erste Antriebsvorrichtung des nachgeschalteten Hilfsförderers (20, 39, 58, 76), wobei zur Einkopplung eines Drehmoments des nachgeschalteten Hilfsförderers (20, 39, 58, 76) eine Antriebswelle (43, 62) des vorgeschalteten Förderers (19, 37, 56) verwendet wird, wobei eine Verlängerung eines Endes der Antriebswelle (43, 62) über eine Lagerung hinaus vorgesehen ist und wobei die Verlängerung über ein Winkelgetriebe mit der ersten Antriebsvorrichtung des nachgeschalteten Hilfsförderers verbunden ist.

7. Umlenkvorrichtung nach einem der Ansprüche 1 bis 3 weiter umfassend eine erste Antriebsvorrichtung des nachgeschalteten Hilfsförderers (20, 39, 58, 76), die unabhängig von einer zweiten Antriebsvorrichtung des nachgeschalteten Förderers (21, 40, 59) ist.

8. Umlenkvorrichtung nach einem der Ansprüche 1 bis 7, wobei die Umlenkvorrichtung (75) einen zweiten nachgeschalteten Hilfsförderer (77) umfasst, der dazu ausgelegt ist, Gegenstände auf einer fünften Transportoberfläche (80) in die zweite Transportrichtung (61) zu transportieren, wobei der zweite nachgeschaltete Hilfsförderer (77) Seite-an-Seite zu dem ersten nachgeschalteten Hilfsförderer (76) und auf einer Seite zu dem vorgeschalteten Förderer (56) angeordnet ist, wobei die zweite Transportoberfläche und die fünfte Transportoberfläche (80) koplanar sind.

9. Umlenkvorrichtung nach einem der Ansprüche 1 bis 8 weiter umfassend ein statisches Überschubblech 38 in einem Bereich zwischen dem vorgeschaltetem Förderer (37) mit dem nachgeschaltetem Hilfsförderer (39) und dem nachgeschaltetem Förderer (40).

10. Umlenkvorrichtung nach einem der Ansprüche 1 bis 9 weiter umfassend ein Innengeländer (32, 51, 71, 78), das sich von einer Innenseite (33, 52, 72) des vorgeschalteten Förderers (19, 37, 56) zu einer Innenseite (34, 53, 73) des nachgeschalteten Förderers (21, 40, 59) erstreckt.

11. Umlenkvorrichtung nach Anspruch 10, wobei das Innengeländer (32, 51, 71, 78) einen Kreisbogen beschreibt.

12. Umlenkvorrichtung nach einem der Ansprüche 1 bis 11 weiter umfassend ein Außengeländer, das sich von einer Außenseite (30, 45, 64) des vorgeschalteten Förderers (19, 37, 56) zu einer Außenseite (31, 46, 65) des nachgeschalteten Förderers (21, 40, 59) erstreckt und dabei vorzugsweise einen Kreisbogen beschreibt.

13. Umlenkvorrichtung nach Anspruch 12, wobei das Außengeländer (29, 44, 63) mitlaufend ausgeführt ist, vorteilhafterweise mit einer Geschwindigkeit die gleich der Transportgeschwindigkeit des vorgeschalteten Förderers (19, 37, 56) ist.

14. Verfahren zum Umlenken von Gegenständen, wie Behältern, Flaschen, Gebinden, Gläsern, Dosen, mit einer Umlenkvorrichtung (18, 36, 55, 75) nach einem der Ansprüche 1 bis 13.

## Claims

1. Deflection device (18, 36, 55, 75) for objects, such as containers, bottles, jars, glasses, cans, comprising:
- an upstream conveyor (19, 37, 56) which is adapted to transport objects on a first transport surface (24, 47, 66) in a first direction of transport (25, 41, 60) and to transfer them to a downstream conveyor (21, 40, 59),
- the downstream conveyor (21, 40, 59) which is adapted to transport objects on a second transport surface in a second direction of transport (26, 42, 61), where the first direction of transport (25, 41, 60) and the second direction of transport (26, 42, 61) are aligned perpendicular to each other and where the first transport surface (24, 47, 66) and the second transport surface are substantially coplanar,
- a downstream assist conveyor (20, 39, 58, 76) which is adapted to transport objects on a third transport surface (35, 54, 74, 79) in the second direction of transport (26, 42, 61), where the downstream assist conveyor (20, 39, 58, 76) is disposed alongside of the downstream conveyor (21, 40, 59) and on one side towards the upstream conveyor (19, 37, 56), where the second transport surface and the third transport surface (35, 54, 74, 79) are coplanar,
**characterised by**
an upstream assist conveyor (57) which is adapted to transport objects on a fourth transport surface (67) in the first direction of transport (60), where the upstream assist conveyor (57) is disposed alongside of the upstream conveyor (56) and on one side towards the downstream conveyor (59), where the first transport surface (66) and the fourth transport surface (67) are coplanar and
where a first width of the downstream assist conveyor (20, 39, 58, 76) is smaller by 50% to 85%, preferably 50% to 75%, than a second width of the downstream conveyor (21, 40, 59).

2. Deflection device according to claim 1, where the first width of the downstream assist conveyor (20, 39, 58, 76) is smaller by 50% to 75% than the second width of the downstream conveyor (21, 40, 59).

3. Deflection device according to claim 1 or 2, where a first length of the downstream assist conveyor (20, 39, 58, 76) is 5% to 30%, preferably 10% to 25%, of a second length of the downstream conveyor (21, 40, 59).

4. Deflection device according to one of the claims 1 to 3, further comprising a first drive device of the downstream assist conveyor (20, 39, 58, 76) which is coupled to a deflection axle (27, 49, 69) of the downstream conveyor (21, 40, 59) by a gear ratio in a range of 1:1 to 1:2, preferably 1:1 to 1:1.5.

5. Deflection device according to claim 4, further comprising a second drive device (83, 89, 90) of the downstream conveyor (21, 40, 59), where the second drive device (83, 89, 90) and the deflection axle (27, 49, 69) are arranged such that the second transport surface comprised by the downstream conveyor (21, 40, 59) is by the second drive device (83, 89, 90) drawn in the second direction of transport (26, 42, 61), where at least one sprocket is disposed on the deflection axle (27, 49, 69), and where a torque thereby provided is by the gear ratio coupled to the first drive device of the downstream assist conveyor (20, 39, 58, 76).

6. Deflection device according to one of the claims 1 to 3, further comprising a first drive device of the downstream assist conveyor (20, 39, 58, 76), where a drive shaft (43, 62) of the upstream conveyor (19, 37, 56) is used for coupling a torque of the downstream assist conveyor (20, 39, 58, 76), where an extension of one end of the drive shaft (43, 62) is provided beyond a bearing, and where the extension is via an angular gear connected to the first drive device of the downstream assist conveyor.

7. Deflection device according to one of the claims 1 to 3, further comprising a first drive device of the downstream assist conveyor (20, 39, 58, 76) which is independent of a second drive device of the downstream conveyor (21, 40, 59).

8. Deflection device according to one of the claims 1 to 7, where the deflection device (75) comprises a second downstream assist conveyor (77) which is adapted to transport objects on a fifth transport surface (80) in the second direction of transport (61), where the second downstream assist conveyor (77) is disposed alongside of the first downstream assist conveyor (76) and on one side towards the upstream conveyor (56), where the second transport surface and the fifth transport surface (80) are coplanar.

9. Deflection device according to one of the claims 1 to 8, further comprising a static transfer plate (38) in an area between the upstream conveyor (37) with the downstream assist conveyor (39) and the downstream conveyor (40).

10. Deflection device according to one of the claims 1 to 9, further comprising an inner rail (32, 51, 71, 78) extending from an inner side (33, 52, 72) of the upstream conveyor (19, 37, 56) to an inner side (34, 53, 73) of the downstream conveyor (21, 40, 59).

11. Deflection device according to claim 10, where the inner rail (32, 51, 71, 78) has the shape of a circular arc.

12. Deflection device according to one of the claims 1 to 11, further comprising an outer rail extending from an outer side (30, 45, 64) of the upstream conveyor (19, 37, 56) to an outer side (31, 46, 65) of the downstream conveyor (21, 40, 59) and there preferably has the shape of a circular arc.

13. Deflection device according to claim 12, where the outer rail (29, 44, 63) is configured as being co-traveling, advantageously at a velocity that is equal to the transport velocity of the upstream conveyor (19, 37, 56).

14. Method for deflecting objects, such as containers, bottles, jars, glasses, cans, with a deflection device (18, 36, 55, 75) according to one of the claims 1 to 13.

## Revendications

1. Dispositif de déviation (18, 36, 55, 75) pour des objets tels que des contenants, des bouteilles, des packs, des verres, des canettes ou boites, comprenant :
- un transporteur amont (19, 37, 56), qui est configuré pour transporter des objets sur une première surface de transport (24, 47, 66) dans une première direction de transport (25, 41, 60), et les transférer à un transporteur aval (21, 40, 59),
- ledit transporteur aval (21, 40, 59), qui est configuré pour transporter des objets sur une deuxième surface de transport dans une deuxième direction de transport (26, 42, 61), la première direction de transport (25, 41, 60) et la deuxième direction de transport (26, 42, 61) étant orientées de manière perpendiculaire l'une à l'autre, et la première surface de transport (24, 47, 66) et la deuxième surface de transport étant sensiblement coplanaires,
- un transporteur auxiliaire aval (20, 39, 58, 76), qui est configuré pour transporter des objets sur une troisième surface de transport (35, 54, 74, 79) dans la deuxième direction de transport (26, 42, 61), le transporteur auxiliaire aval (20, 39, 58, 76) étant agencé côte à côte avec le transporteur aval (21, 40, 59) et d'un côté vers le transporteur amont (19, 37, 56), la deuxième surface de transport et la troisième surface de transport (35, 54, 74, 79) étant coplanaires,
**caractérisé par**
un transporteur auxiliaire amont (57), qui est configuré pour transporter des objets sur une quatrième surface de transport (67) dans la première direction de transport (60), le transporteur auxiliaire amont (57) étant agencé côte à côte avec le transporteur amont (56) et d'un côté vers le transporteur aval (59), la première surface de transport (66) et la quatrième surface de transport (67) étant coplanaires, et
une première largeur du transporteur auxiliaire aval (20, 39, 58, 76) est de 50% à 85% plus petite qu'une deuxième largeur du transporteur aval (21, 40, 59).

2. Dispositif de déviation selon la revendication 1, dans lequel la première largeur du transporteur auxiliaire aval (20, 39, 58, 76) est de 50% à 75% plus petite que la deuxième largeur du transporteur aval (21, 40, 59).

3. Dispositif de déviation selon la revendication 1 ou la revendication 2, dans lequel une première longueur du transporteur auxiliaire aval (20, 39, 58, 76) vaut de 5% à 30%, de préférence de 10% à 25%, d'une deuxième longueur du transporteur aval (21, 40, 59).

4. Dispositif de déviation selon l'une des revendications 1 à 3, comprenant, en outre, un premier dispositif d'entraînement du transporteur auxiliaire aval (20, 39, 58, 76), qui est couplé à un axe de renvoi (27, 49, 69) du transporteur aval (21, 40, 59) au moyen d'un système de démultiplication à roues dentées dans une plage de 1:1 à 1:2, de préférence de 1:1 à 1:1,5.

5. Dispositif de déviation selon la revendication 4, comprenant, en outre, un deuxième dispositif d'entraînement (83, 89,90) du transporteur aval (21, 40, 59), dans lequel le deuxième dispositif d'entraînement (83, 89,90) et l'axe de renvoi (27, 49, 69) sont agencés de manière telle, que la deuxième surface de transport formée par le transporteur aval (21, 40, 59) soit tirée par le deuxième dispositif d'entraînement (83, 89,90) dans la deuxième direction de transport (26, 42, 61), dans lequel sur l'axe de renvoi (27, 49, 69) est agencée au moins une roue à chaîne, et dans lequel un couple ainsi disponible est couplé au moyen du système de démultiplication à roues dentées, au premier dispositif d'entraînement du transporteur auxiliaire aval (20, 39, 58, 76).

6. Dispositif de déviation selon l'une des revendication 1 à 3, comprenant, en outre, un premier dispositif d'entraînement du transporteur auxiliaire aval (20, 39, 58, 76), dans lequel pour assurer le couplage d'entrée d'un couple dans le transporteur auxiliaire aval (20, 39, 58, 76), on utilise un arbre d'entraînement (43, 62) du transporteur amont (19, 37, 56), dans lequel il est prévu un prolongement d'une extrémité de l'arbre d'entraînement (43, 62) au-delà d'un système de palier, et dans lequel le prolongement est relié par l'intermédiaire d'une transmission à renvoi d'angle, au premier dispositif d'entraînement du transporteur auxiliaire aval.

7. Dispositif de déviation selon l'une des revendication 1 à 3, comprenant, en outre, un premier dispositif d'entraînement du transporteur auxiliaire aval (20, 39, 58, 76), qui est indépendant d'un deuxième dispositif d'entraînement du transporteur aval (21, 40, 59).

8. Dispositif de déviation selon l'une des revendications 1 à 7, dans lequel le dispositif de déviation (75) comprend un deuxième transporteur auxiliaire aval (77), qui est configuré pour transporter des objets sur une cinquième surface de transport (80) dans la deuxième direction de transport (61), le deuxième transporteur auxiliaire aval (77) étant agencé côte à côte avec le premier transporteur auxiliaire aval (76) et d'un côté vers le transporteur amont (56), la deuxième surface de transport et la cinquième surface de transport (80) étant coplanaires.

9. Dispositif de déviation selon l'une des revendications 1 à 8, comprenant, en outre, une tôle de transfert statique (38) dans une zone entre le transporteur amont (37) avec le transporteur auxiliaire aval (39) et le transporteur aval (40).

10. Dispositif de déviation selon l'une des revendications 1 à 9, comprenant, en outre, un guide latéral intérieur (32, 51, 71, 78), qui s'étend d'un côté intérieur (33, 52, 72) du transporteur amont (19, 37, 56) à un côté intérieur (34, 53, 73) du transporteur aval (21, 40, 59).

11. Dispositif de déviation selon la revendication 10, dans lequel le guide latéral intérieur (32, 51, 71, 78) décrit un arc de cercle.

12. Dispositif de déviation selon l'une des revendications 1 à 11, comprenant, en outre, un guide latéral extérieur, qui s'étend d'un côté extérieur (30, 45, 64) du transporteur amont (19, 37, 56) à un côté extérieur (31, 46, 65) du transporteur aval (21, 40, 59) en décrivant à cette occasion de préférence un arc de cercle.

13. Dispositif de déviation selon la revendication 12, dans lequel le guide latéral extérieur (29, 44, 63) est d'une configuration accompagnante, de préférence avec une vitesse qui est égale à la vitesse de transport du transporteur amont (19, 37, 56).

14. Procédé pour assurer la déviation d'objets tels que des contenants, des bouteilles, des packs, des verres, des canettes ou boites, à l'aide d'un dispositif de déviation (18, 36, 55, 75) selon l'une des revendications 1 à 13.
